# EUROPÄISCHE PATENTSCHRIFT

(11) **EP 0 799 413 B1**
(45) Veröffentlichungstag und Bekanntmachung des Hinweises auf die Patenterteilung: **23.02.2000**
(21) Anmeldenummer: 95932704.0
(22) Anmeldetag: 09.09.1995
(51) Int. Cl.: G01L 21/34, H01J 41/06

(54) **PENNING-MESSZELLE MIT ZÜNDHILFE**
PENNING MEASURING CELL WITH IGNITION AID
CELLULE DE MESURE PENNING AVEC DISPOSITIF D'AIDE A L'AMOR AGE

(30) Priorität: 22.12.1994 DE 4445828
(43) Veröffentlichungstag der Anmeldung: 08.10.1997
(73) Patentinhaber: LEYBOLD VACUUM GmbH, 50968 Köln (DE)
(72) Erfinder: KÜSTER, Gerhard, D-51109 Köln (DE)
(74) Vertreter: Leineweber, Jürgen, Dipl.-Phys.
(86) Internationale Anmeldenummer: EP9503553
(87) Internationale Veröffentlichungsnummer: WO9619720

(56) Entgegenhaltungen:
- EP-A- 0 271 769
- DE-A- 3 047 744

## Beschreibung

Die Erfindung bezieht sich auf eine Penning-Meßzelle mit einem Elektrodensystem, das eine Anode und eine Katode umfaßt, welche im Magnetfeld eines Permanentmagneten angeordnet sind, sowie mit einer Zündhilfe für das Elektrodensystem.

Penning-Meßzellen dieser Art werden in Ionisationsvakuummeter eingebaut. Sie weisen zwei unbeheizte Elektroden (Katode und Anode) auf, zwischen denen mittels einer Gleichspannung in der Größenordnung von 2kV eine kalte Entladung gezündet und aufrechterhalten wird. Mit Hilfe eines Magnetfeldes wird der Weg der Elektronen verlängert, so daß ihre Stoßrate mit Gasmolekülen ausreichend groß ist, um die zur Aufrechterhaltung der Entladung erforderliche Anzahl von Ladungsträgern - auch bei sehr tiefen Drücken - zu bilden. Die positiven und negativen Ladungsträger wandern zu den entsprechenden Elektroden und bilden den druckabhängigen Entladungsstrom, der auf einer Meßskala angezeigt wird. Nachteilig an Vakuummetern dieser Art ist, daß die Entladung nicht immer gezündet werden kann.

Aus der DE-OS 30 47 744 ist eine Meßzelle der eingangs genannten Art bekannt. Zur Erzielung einer sicheren Zündung wird vorgeschlagen, neben dem aus unbeheizten Elektroden bestehenden Meßsystem zusätzlich eine Glühkatode vorzusehen. Diese Maßnahme ist aufwendig, da sie die Zuführung eines ausreichend großen Stromes zur Glühkatode erfordert. Eine zusätzliche Stromversorgungseinrichtung sowie eine gesonderte Stromdurchführung sind erforderlich.

Aus der EU-A-271 769 ist eine Meßzelle der hier betroffenen Gattung bekannt, die neben dem Meßsystem (Haupt-Meßsystem) ein weiteres Penning-System mit Katode und Anode (Zündsystem) aufweist. Seine Abmessungen sind wesentlich kleiner als die Abmessungen des Hauptsystems. Die Herstellung eines Zündsystems dieser Art ist ebenfalls aufwendig. Außerdem haben Tests ergeben, daß eine Zündung des Meßsystems nicht immer sichergestellt ist. Die aus der EU-A- 271 769 bekannte Meßzelle ist deshalb nie in den Markt eingeführt worden.

Der vorliegenden Erfindung liegt die Aufgabe zugrunde, eine Meßzelle der eingangs erwähnten Art mit einer sicheren und in Bezug auf seine Bauweise einfachen Zündhilfe auszurüsten.

Erfindungsgemäß wird diese Aufgabe dadurch gelöst, daß mindestens ein Metallstreifen an der Anode befestigt ist, dessen freies Ende sich in Richtung Katode erstreckt. Aufgrund der im Bereich des freien Endes des Metallstreifens herrschenden hohen elektrischen Feldstärke werden Gasionen abgelöst, die auf die Katode auftreffen und dort Sekundärelektronen erzeugen. Diese bewirken ein schnelles und sicheres Zünden des Elektrodensystems.

Als besonders vorteilhafte Maßnahme hat sich erwiesen, die Längsrichtung des Metallstreifens so zu wählen, daß sie nicht parallel zu Magnetlinien liegt, sondern Magnetlinien kreuzt. Die Zündwahrscheinlichkeit konnte durch diese Maßnahme nochmals erheblich gesteigert werden.

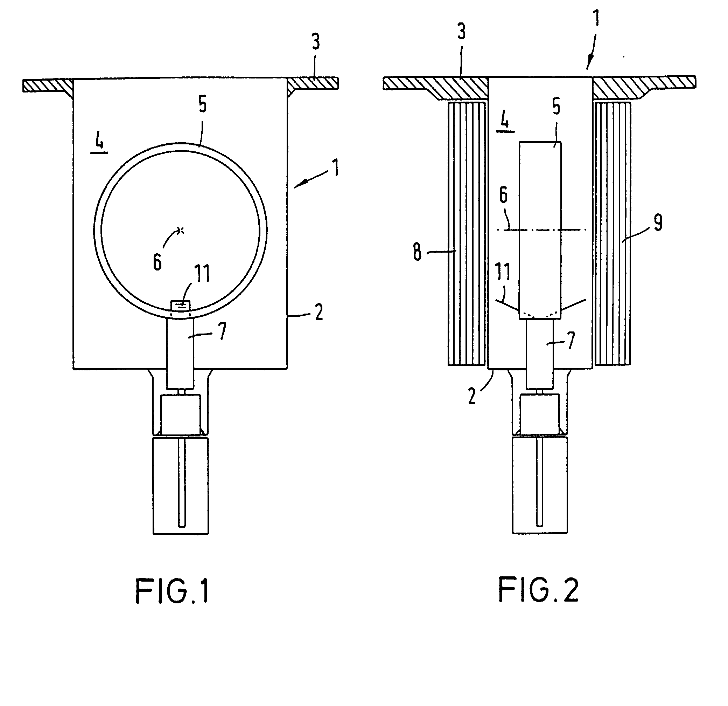

Weitere Vorteile und Einzelheiten der Erfindung sollen anhand eines in den Figuren 1 und 2 dargestellten Ausführungsbeispieles erläutert werden.

Die schematisch dargestellte Penning-Meßzelle 1 weist ein vakuumdichtes Gehäuse 2 auf, das gleichzeitig die Katode bildet.

Das Gehäuse 2 ist mit einem Flansch 3 ausgerüstet, mit dem die Zelle an einen Rezipienten angeschlossen wird, in dem der Druck gemessen und/oder überwacht werden soll.

Innerhalb des vom Gehäuse bzw. von der Katode 2 gebildeten Raumes 4 befindet sich die ringförmige Anode 5, deren Achse mit 6 bezeichnet ist. Mit Hilfe der Anodenspannungszuführung 7 ist die Anode 5 im Elektrodenraum 4 gehaltert. Die Anodenspannungszuführung liegt auf einem positiven Hochspannungspotential (ca. 2 kV). Zwischen der Anode 5 und dem geerdeten Gehäuse 2 wird während des Betriebs der Zelle die Entladung aufrechterhalten.

Anode 5 und Katode bzw. Gehäuse 2 befinden sich in einem Magnetfeld, das von den Magneten 8 und 9 erzeugt wird. Jeweils ein Nordpol und ein Südpol sind dem Gehäuse 2 zugewandt, so daß sich die Magnetlinien des magnetischen Feldes etwa parallel zur Anodenachse 6 erstrecken.

Als Zündhilfe ist ein Metallstreifen 11 vorgesehen, der mittig im Bereich der Anodenspannungszuführung 7 am Anodenring 5 befestigt ist und dessen freie Enden seitlich aus den Öffnungen des Anodenringes 5 herausragen. Die freien Enden erstrecken sich bis in die Nähe der Katode bzw. des Gehäuses 2. Die hohe elektrische Feldstärke an dieser Stelle löst von den Enden des Blechstreifens Gasionen ab, die beim Auftreffen auf die Gehäusewand Sekundärelektronen erzeugen. Durch diese Elektronen wird ein schnelles und sicheres Zünden der Penning-Zelle auch bei niedrigen Drücken möglich.

Zweckmäßig besteht der Blechstreifen aus 0,1 mm dickem, schwach magnetischen Material. Der Abstand zur Gehäusewand beträgt 0,5 bis 1,0 mm bei einem Durchmesser der Ringanode 5 von ca. 50 mm (?). Es ist natürlich auch möglich, daß die Zündhilfe aus zwei separaten Blechstreifen besteht, die jeweils mit ihrem einen Ende am Anodenring 5 befestigt sind. Auch bereits nur ein Metallstreifen dieser Art reicht als Zündhilfe aus.

Um zu erreichen, daß sich die die Zündhilfe bildenden Metallstreifen 11 nicht parallel zu den üblicherweise parallel zur Anodenringachse 6 liegenden Magnetlinien erstrecken, werden die freien Ende des oder der Blechstreifen 11 nach ihrer Befestigung am Anodenring 5 z.B. in Richtung Ringachse 6 gebogen. Als zweckmäßig hat sich ein Winkel von etwa 20° zwischen Metallstreifen 11 und Ringachse 6 erwiesen.

## Patentansprüche

1. Penning-Meßzelle (1) mit einem Elektroden-System, das eine Anode (5) und eine Katode (2) umfaßt, welche im Magnetfeld eines Permanent-Magneten (8, 9) angeordnet sind, sowie mit einer Zündhilfe (11) für das Elektroden-System (2, 5), dadurch gekennzeichnet, daß die Zündhilfe aus mindestens einem Metallstreifen (11) besteht, an der Anode (5) befestigt is und dessen freies Ende sich in Richtung Katode (2) erstreckt.

2. Zelle nach Anspruch 1, dadurch gekennzeichnet, daß ein Ring (5) die Anode sowie ein den Ring (5) umgebendes Gehäuse (2) die Katode bilden und daß der Metallstreifen (11) im Bereich der Anodenspannungszuführung (7) am Anodenring befestigt ist.

3. Zelle nach Anspruch 2, dadurch gekennzeichnet, daß zwei seitlich aus den Öffnungen des Anodenrings (5) hervorragende Metallstreifen (11) vorgesehen sind.

4. Meßzelle nach Anspruch 2, dadurch gekennzeichnet, daß ein Metallstreifen (11) mittig am Anodenring befestigt ist und daß seine Enden aus den Öffnungen des Anodenrings (5) hervorragen.

5. Meßzelle nach einem der Ansprüche 1 bis 5, dadurch gekennzeichnet, daß die Längsrichtung der Metallstreifen (11)derart gewählt ist, daß sie Magnetfeldlinien kreuzen.

6. Meßzelle nach Anspruch 5, dadurch gekennzeichnet, daß der Winkel zwischen der Längsrichtung der Metallstreifen (11) und den Magnetlinien in der Größenordnung von 20° liegt.

7. Meßzelle nach einem der vorhergehenden Ansprüche, dadurch gekennzeichnet, daß die Metallstreifen (11) aus einem schwach magnetischem Material bestehen.

## Claims

1. Penning measuring cell (1) having an electrode system comprising an anode (5) and a cathode (2) which are disposed in the magnetic field of a permanent magnet (8, 9), and having an ignition aid (11) for the electrode system (2, 5), characterized in that the ignition aid comprises at least one metal strip (11), is attached to the anode (5) and its unsupported end extends in the direction of the cathode (2).

2. Cell according to Claim 1, characterized in that a ring (5) forms the anode and a housing (2) which surrounds the ring (5) forms the cathode and in that the metal strip (11) is attached to the anode ring in the region of the anode voltage feed (7).

3. Cell according to Claim 2, characterized in that two metal strips (11) are provided which project laterally out of the openings of the anode ring (5).

4. Measuring cell according to Claim 2, characterized in that a metal strip (11) is attached centrally to the anode ring and that its ends project out of the openings of the anode ring (5).

5. Measuring cell according to one of Claims 1 to 5, characterized in that the longitudinal direction of the metal strips (11) is chosen so that they cross magnetic field lines.

6. Measuring cell according to Claim 5, characterized in that the angle between the longitudinal direction of the metal strips (11) and the magnetic lines is in the order of magnitude of 20°.

7. Measuring cell according to one of the preceding claims, characterized in that the metal strips (11) are composed of a weakly magnetic material.

## Revendications

1. Jauge de Penning (1) équipée d'un système d'électrodes, qui comporte une anode (5) et une cathode (2), qui sont disposées dans le champ magnétique d'un aimant permanent (8, 9), ainsi que d'un dispositif auxiliaire d'amorçage (11) pour le système d'électrodes (2, 5), caractérisée en ce que le dispositif auxiliaire d'amorçage se compose au moins d'une bande métallique (11) qui est fixée à l'anode (5) et dont l'extrémité libre s'étend en direction de la cathode (2).

2. Jauge selon la revendication 1, caractérisée en ce qu'une bague (5) forme l'anode ainsi qu'un boîtier (2) entourant la bague (5) forme la cathode et en ce que la bande métallique (11) est fixée à proximité de l'amenée de tension d'anode (7) à La bague d'anode.

3. Jauge selon la revendication 2, caractérisée en ce que deux bandes métalliques (11) faisant saillie latéralement hors des ouvertures de la bague d'anode (5) sont prévues.

4. Jauge selon la revendication 2, caractérisée en ce qu'une bande métallique (11) est fixée au milieu à la bague d'anode et en ce que ses extrémités font saillie hors des ouvertures de la bague d'anode (5).

5. Jauge selon l'une quelconque des revendications 1 à 5, caractérisée en ce que la direction longitudinale des bandes métalliques (11) est choisie de telle sorte qu'elles croisent les lignes de champ magnétique.

6. Jauge selon la revendication 5, caractérisée en ce que l'angle entre la direction longitudinale des bandes de métal (11) et les lignes de champ magnétique est de l'ordre de grandeur de 20°.

7. Jauge selon l'une quelconque des revendications précédentes, caractérisée en ce que les bandes métalliques (11) sont en un matériau magnétique doux.
